# FASCICULE DE BREVET EUROPEEN

(11) **EP 3 744 927 B1**
(45) Date de publication et mention de la délivrance du brevet: **17.11.2021**
(21) Numéro de dépôt: 20170118.2
(22) Date de dépôt: 17.04.2020
(51) Int. Cl.: E04H 4/16

(54) **BALAI ASPIRATEUR À DOUBLE FILTRATION POUR LE NETTOYAGE DE PISCINES**
BÜRSTSAUGER MIT DOPPELTER FILTERUNG FÜR DIE REINIGUNG VON SCHWIMMBÄDERN
UPRIGHT VACUUM CLEANER WITH DOUBLE FILTER FOR CLEANING SWIMMING POOLS

(30) Priorité: 07.05.2019 FR 1904746
(43) Date de publication de la demande: 02.12.2020
(73) Titulaire: Kokido Development Limited, Kowloon, Hong Kong (HK)
(72) Inventeur: ROUMAGNAC, Max, 33127 MARTIGNAS SUR JALLE (FR); BRUNEEL, Jean, 999077 KOWLOON (HK)
(74) Mandataire: Ipside

(56) Documents cités:
- FR-A1- 2 480 340
- FR-A1- 2 683 845
- US-A- 3 755 843
- US-A- 4 581 075

## Description

### DOMAINE TECHNIQUE

La présente invention appartient au domaine des dispositifs d'entretien de piscines, notamment des balais aspirateurs, et concerne plus particulièrement un balai aspirateur à double filtration pour le nettoyage de piscines.

### ÉTAT DE L'ART

Il existe plusieurs types de balais aspirateurs, dits autonomes car alimentés par une batterie embarquée, destinés au nettoyage de piscines, et plus généralement à fonctionner sous l'eau.

Le document US 3755843 divulgue une première conception classique selon laquelle le balai aspirateur comprend successivement une tête d'aspiration, un bac à débris contenant un filtre puis une pompe aspirante qui rejette l'eau filtrée dans la piscine.

Plusieurs modèles relevant de cette conception sont commercialisés, notamment par les sociétés *Watertech, Kokido, Intex* et *Ryobi,* les documents US 6797157 et US 9903133 divulguant respectivement les modèles commercialisés par les deux premières.

Dans la même catégorie, le document US 7636975, au nom de la société *Hydrodynamic*, divulgue un nettoyeur automatique de type aspirateur comportant un seul filtre, situé à l'intérieur du corps à débris. Les documents FR 2 480 340 A1, US 4 581 075 A et FR 2 683 845 A1 montrent aussi des balais aspirateurs selon l'état de la technique connu.

Pour limiter l'encombrement, en particulier la hauteur totale du balai aspirateur, le compartiment à débris doit être de capacité limitée, limitant en conséquence le volume du filtre contenu dans ce compartiment ainsi que sa surface filtrante.

En raison de sa surface limitée, le filtre ne peut pas avoir une finesse élevée sous peine de colmatage rapide et donc de perte d'efficacité de l'aspirateur.

Cette contrainte implique l'utilisation de filtres d'une finesse « moyenne » qui ne permettent pas de capter les particules les plus fines, celles-ci sont rejetées avec l'eau filtrée, et se retrouvent en suspension dans le volume d'eau du bassin, qui prend ainsi un aspect trouble, avant de regagner le fond du bassin, sous l'effet de la gravité, après l'opération de nettoyage.

Ce phénomène de rejet des particules fines est une cause d'insatisfaction pour la plupart des utilisateurs.

Le document US 9546493 divulgue une seconde conception selon laquelle le balai aspirateur comprend successivement une tête d'aspiration, un compartiment à débris lourds sans filtre, une pompe aspirante annulaire qui permet le passage des débris volumineux puis une poche filtrante, en prolongement du compartiment principal, qui récupère les débris et rejette l'eau filtrée dans la piscine.

Dans cette conception, seuls les débris les plus lourds sont captés par gravité dans le compartiment amont (sans filtre) et ceux ayant une densité plus faible sont aspirés par la pompe annulaire et propulsés dans un filtre en aval de la pompe aspirante. Ce filtre unique récupère donc une majeure partie des débris (feuilles, insectes et particules fines), néanmoins, en raison de la finesse du filtre nécessaire pour retenir les particules fines, il se colmate rapidement comme dans la conception précédente.

Dans le domaine des aspirateurs ménagers le document US 2017265698, au nom de la société *Dyson* divulgue un aspirateur avec un premier séparateur air-poussière cyclonique à l'aspiration et un deuxième filtre à cartouche relié à la sortie de l'air et entourant partiellement le moteur mais à l'intérieur de la carcasse. Ce deuxième filtre n'est pas complétement circulaire, mais présente une forme en « C », et le passage de l'air est canalisé par deux conduits qui font circuler l'air depuis les extrémités du C dans deux sens de rotation opposés pour répartir les poussières sur l'ensemble du filtre.

Le document WO 0066247 divulgue un aspirateur constitué d'un boitier principal dans lequel sont placés un filtre principal (séparateur air-poussière à eau) à l'aspiration, un moto-ventilateur puis un filtre secondaire et un filtre à charbon. Tous les systèmes de filtration, et notamment les filtres secondaires, sont situés à l'intérieur du boitier principal, lequel boitier présente donc un volume important et un encombrement problématique.

En résumé, les balais aspirateurs autonomes existants comprennent un filtre unique, situé soit en amont soit en aval de la pompe aspirante. Si ce filtre unique est à mailles fines il risque un colmatage rapide par l'ensemble des débris, et s'il est à grosses mailles il ne bloque pas les particules fines. Certains fabricants livrent en option des filtres à particules fines, mais en raison de leur taille réduite (limitée par la taille du bac à débris) ils sont rapidement colmatés et doivent être lavés plusieurs fois lors d'un seul nettoyage de la piscine. Ces balais aspirateurs, adaptés au ramassage des débris lourds (cailloux, sable) et volumineux (feuilles), retiennent de façon imparfaite ou en faible quantité les particules fines, cela représente un inconvénient majeur pour l'utilisateur et résulte en une eau trouble à la fin de l'opération de nettoyage du fond, et/ou nécessite des lavages répétés d'un éventuel filtre fin fourni avec le balai aspirateur.

### PRÉSENTATION DE L'INVENTION

La présente invention vise à pallier les inconvénients et limitations de l'art antérieur.

À cet effet, la présente invention concerne un balai aspirateur pour le nettoyage de piscines comportant un corps principal, des moyens de pompage, une tête d'aspiration et un filtre amont, placé à l'intérieur du corps principal et en amont des moyens de pompage. Ce balai aspirateur est remarquable en ce qu'il comporte un filtre aval placé à l'extérieur du corps principal et en aval des moyens de pompage, de sorte à envelopper totalement ou partiellement ledit corps, et en ce que lesdits filtres sont coaxiaux.

Ainsi, le filtre amont, le corps principal et le filtre aval se succèdent dans cet ordre, en partant de l'axe du balai aspirateur vers l'extérieur, pour une meilleure compacité et un encombrement limité.

Avantageusement, le filtre amont est traversé par l'eau de l'aspiration des moyens de pompage, et le filtre aval est traversé par l'eau du refoulement desdits moyens de pompage.

Le balai aspirateur permet donc une double filtration de l'eau, en amont et en aval des moyens de pompage. De plus, les mailles du filtre aval sont plus fines que celles du filtre amont pour affiner la filtration. En effet, les particules de plus gros calibre sont captées pas le filtre amont, celui-ci laissant passer les particules de plus petit calibre, lesquelles sont ensuite captées par le filtre aval.

La double filtration permet de limiter les risques de colmatage rapide des filtres.

Selon un mode de réalisation avantageux, le filtre aval est fixé au corps principal de sorte à envelopper des parois latérales dudit corps sur toute leur circonférence et sur une longueur inférieure ou égale à une longueur dudit corps.

Plus particulièrement, le filtre aval est fixé au corps principal par des moyens de fixation de sorte à enserrer ledit corps.

Par exemple, les moyens de fixation sont annulaires et permettent une fixation étanche.

Selon un mode de réalisation, le filtre aval est constitué d'un matériau poreux tel qu'un textile.

Selon un mode de réalisation, le filtre aval comprend au moins deux couches de matériau filtrant adjacentes.

Selon un mode de réalisation, le filtre aval est placé à l'intérieur d'une cassette de protection solidaire du corps principal ou amovible, ladite cassette comportant au moins deux volets articulés.

Selon un mode de réalisation, les moyens de pompage comprennent une turbine entrainée par un moteur électrique.

Selon un mode de réalisation alternatif, les moyens de pompage comprennent une hélice entrainée par un moteur électrique.

De façon avantageuse, le balai aspirateur est autonome et comporte une batterie pour alimenter les moyens de pompage.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif un mode de réalisation d'un balai aspirateur conforme aux principes de l'invention.

### BRÈVE DESCRIPTION DES FIGURES

Les éléments d'une même figure, ainsi que les figures elles-mêmes, ne sont pas nécessairement à la même échelle. Sur l'ensemble des figures, les éléments identiques ou équivalents portent le même repère numérique.

Il est ainsi illustré en :
[Fig. 1] : une vue schématique en coupe longitudinale d'un balai aspirateur selon un premier mode de réalisation de l'invention ;
[Fig. 2] : une vue schématique en coupe longitudinale d'un balai aspirateur selon un deuxième mode de réalisation de l'invention ;
[Fig. 3] : une coupe du balai aspirateur de la figure 1 selon un plan transversal A-A;
[Fig. 4] : une coupe du balai aspirateur de la figure 2 selon un plan transversal B-B;
[Fig. 5a] : un exemple de balai aspirateur selon l'invention équipé d'un filtre aval en deux couches ;
[Fig. 5b] : un autre exemple de balai aspirateur selon l'invention équipé d'un filtre en cartouche plissée ;
[Fig. 6a] : une section du balai aspirateur de la figure 5a selon un plan transversal C-C ;
[Fig. 6b] : une section du balai aspirateur de la figure 5b selon un plan transversal D-D;
[Fig. 7] : une vue partielle en perspective d'un balai aspirateur selon un troisième mode de réalisation de l'invention ;
[Fig. 8] : une vue en perspective d'un balai aspirateur selon un quatrième mode de réalisation avec la cassette de protection retirée.

### DESCRIPTION DÉTAILLÉE DE MODES DE RÉALISATION

La terminologie employée dans la présente invention ne doit en aucun cas être interprétée de manière limitative ou restrictive. Elle est simplement employée en conjonction avec une description détaillée de certains modes de réalisation de l'invention.

Dans les modes de réalisation décrits ci-après, on fait référence à des balais aspirateurs destinés principalement au nettoyage de piscines. Cet exemple, non limitatif, est donné pour une meilleure compréhension de l'invention et n'exclut pas l'utilisation de l'invention dans d'autres types de bassins.

Dans la suite de la description, l'expression « balai aspirateur » désigne un appareil automatique de nettoyage pour piscines, présentant une forme allongée et destiné à être manipulé par un utilisateur.

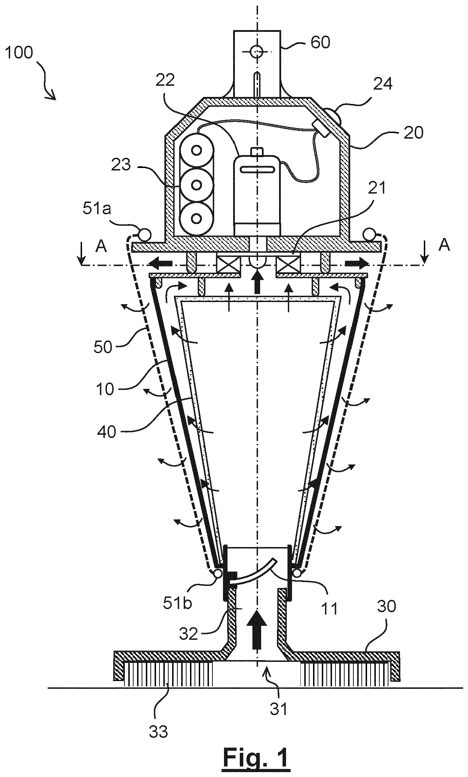

La figure 1 représente un balai aspirateur 100, selon un premier mode de réalisation de l'invention, comportant principalement un corps 10 de collecte de débris, un boitier fonctionnel 20 étanche, surmontant le corps 10 et contenant des moyens d'aspiration et d'alimentation du balai aspirateur, une tête d'aspiration 30 à l'extrémité inférieure du corps 10, qui entre au contact de la surface à nettoyer, un filtre amont 40 placé à l'intérieur du corps 10, et un filtre aval 50 placé à l'extérieur du corps 10.

Le corps 10 de collecte de débris présente une forme tronconique, à base circulaire ou elliptique, ou pyramidale, à base rectangulaire ou polygonale quelconque, avec une convergence vers la tête d'aspiration 30 pour augmenter la vitesse de l'eau aspirée à l'entrée, au niveau de ladite tête, et comporte un clapet 11 qui s'ouvre sous l'effet de l'aspiration et se referme en l'absence d'aspiration pour empêcher les débris de retomber dans l'eau du bassin.

Le boitier fonctionnel 20, selon l'exemple de réalisation de la figure 1, définit un volume intérieur contenant une pompe, constituée d'une turbine 21 entrainée par un moteur électrique 22, et une batterie d'alimentation 23 permettant de fournir l'énergie électrique nécessaire au moteur 22. La batterie 23 est rechargeable et peut être fixe ou amovible, assurant ainsi une autonomie au balai aspirateur 100.

Le boitier fonctionnel 20 comporte en outre un bouton marche/arrêt 24, et peut éventuellement disposer d'autres composants électroniques, connus de l'homme du métier, tels qu'un contrôleur d'alimentation, un régulateur de puissance avec une molette de contrôle, des témoins lumineux de l'état de charge de la batterie, etc.

Le boitier fonctionnel est en outre surmonté d'une tête de manche 60 pour fixer un manche ou tout autre moyen de préhension du balai aspirateur 100.

Pour l'intelligence de l'invention, le corps 10 de collecte de débris et le boitier fonctionnel 20 peuvent être considérés comme constituant un seul élément qui serait par exemple appelé « corps principal » du balai.

La tête d'aspiration 30, selon l'exemple de réalisation de la figure 1, comprend principalement une bouche d'aspiration 31, un canal d'aspiration 32 communicant à la fois avec ladite bouche et le corps 10 de collecte de débris, et des organes de nettoyage 33 de type brosse pour désincruster le fond du bassin de ses dépôts et faciliter son nettoyage.

Le filtre amont 40, selon l'exemple de réalisation de la figure 1, présente une forme similaire à celle du corps 10 à l'intérieur duquel il est placé, tronconique ou pyramidale dans le cas présent, et des dimensions adaptées pour son insertion dans un volume intérieur dudit corps. Le filtre amont 40 est un filtre primaire à « grosses » mailles qui bloque les débris les plus volumineux et laisse passer les débris les plus fins, autrement dit il comporte des mailles présentant un diamètre adapté pour empêcher le passage des débris considérés comme les plus volumineux et qui constituent une majeure partie des débris, tout du moins des débris visibles, mais qui n'est pas suffisamment réduit pour filtrer les débris les plus fins. De ce fait, les risques de colmatage de ce filtre primaire sont limités.

Selon l'exemple de réalisation de la figure 1, le filtre amont 40 est ouvert sur le canal d'aspiration 32 de la tête d'aspiration 30 et est à cet effet raccordé à une portion du corps 10 en prolongement dudit canal d'aspiration. Ainsi, les débris filtrés par le filtre amont 40 sont retenus à l'intérieur dudit filtre.

En raison de sa position à l'intérieur du corps 10, le filtre amont 40 opère une filtration en amont de la pompe. L'eau refoulée par la pompe traverse ensuite le filtre aval 50 qui opère donc une filtration en aval de la pompe.

Le filtre aval 50, selon l'exemple de réalisation de la figure 1, est positionné autour du corps 10 de collecte de débris, qu'il enveloppe quasi intégralement, et constitue un filtre secondaire à mailles « fines » qui bloque des débris de petit calibre que le filtre primaire, le filtre amont 40, n'a pas bloqués. Autrement dit, le filtre aval 50 comporte des mailles présentant un diamètre suffisamment petit pour empêcher le passage de particules fines, jusqu' à une certaine taille.

De plus, le filtre aval 50 présente une surface de filtration importante qui réduit la vitesse de passage de l'eau, de sorte à permettre audit filtre de capter plus de particules fines en réduisant considérablement le risque de colmatage rapide. En effet, plus la surface filtrante est grande plus la vitesse de passage de l'eau est faible et plus la filtration est efficace.

Le filtre aval 50, selon l'exemple de réalisation de la figure 1, est fixé autour du corps 10 de collecte de débris par des moyens de fixations, supérieurs 51a et inférieurs 51b, pouvant être annulaires tels que des anneaux de blocage de diamètres adaptés pour permettre au filtre aval d'épouser la forme du corps.

De préférence, les moyens de fixation 51a et 51b permettent une fixation étanche pour éviter les fuites d'eau, et par là-même des particules fines non encore filtrées, au niveau de ces fixations et canaliser l'eau du refoulement vers les parois du filtre aval 50.

Les moyens de fixations peuvent également être élastiques tels que des joints toriques en caoutchouc pour un montage et un démontage aisés du filtre aval, à condition que le matériau filtrant du filtre aval présente à son tour une certaine élasticité.

Le filtre aval 50 peut être monté sur le balai aspirateur 100 en retirant temporairement la tête d'aspiration 30 pour faire passer le filtre aval, par son ouverture de plus grand diamètre, autour du corps 10 à partir de l'extrémité convergente dudit corps.

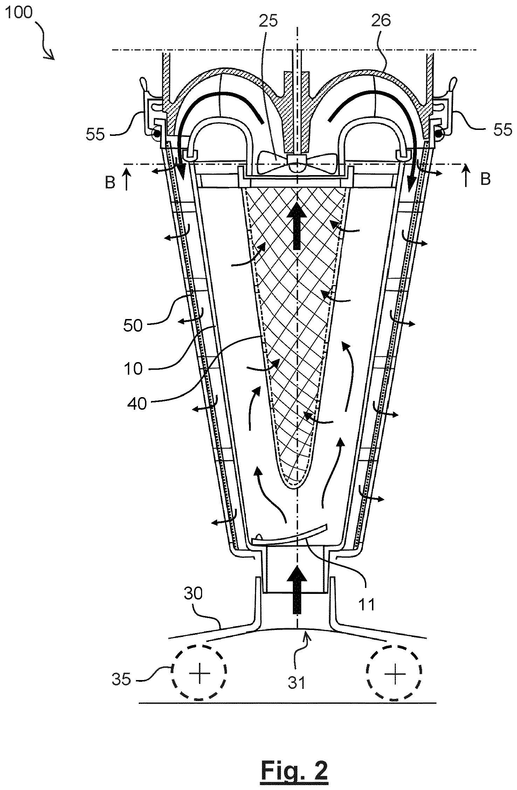

La figure 2 représente un balai aspirateur 100, selon un deuxième mode de réalisation de l'invention, dans lequel l'aspiration est assurée par une pompe comprenant une hélice 25 couplée à un moteur électrique non représenté.

Selon l'exemple de réalisation de la figure 2, l'hélice est agencée au pied d'un carter 26 annulaire définissant des canaux incurvés de passage de l'eau au refoulement.

La tête d'aspiration 30, selon l'exemple de réalisation de la figure 2, est équipée d'organes de déplacement 35 tels que des roues, des roulettes, des rouleaux, etc.

Le filtre amont 40, selon l'exemple de réalisation de la figure 2, est ouvert sur la pompe et fermé par le bas au niveau de l'entrée du corps 10 de collecte de débris. Cette disposition est à l'inverse de celle de la figure 1 et permet au corps 10 de collecter les débris à l'extérieur du filtre amont 40. L'eau traverse ainsi le filtre amont 40 en laissant les débris volumineux dans l'espace interstitiel entre les parois dudit filtre et celles du corps 10, pour ensuite être refoulée par la pompe avant d'être filtrée par le filtre aval 50.

Le filtre aval 50, selon l'exemple de réalisation de la figure 2, enveloppe le corps 10 de collecte de débris de la même façon que dans le premier mode de réalisation au détail près qu'il comporte une armature rigide qui permet son emboitement autour dudit corps. La fixation du filtre aval 50 au corps 10 s'effectue dans ce cas par clipsage par exemple via des moyens de clipsage 55 adaptés installés dans une partie supérieur dudit filtre.

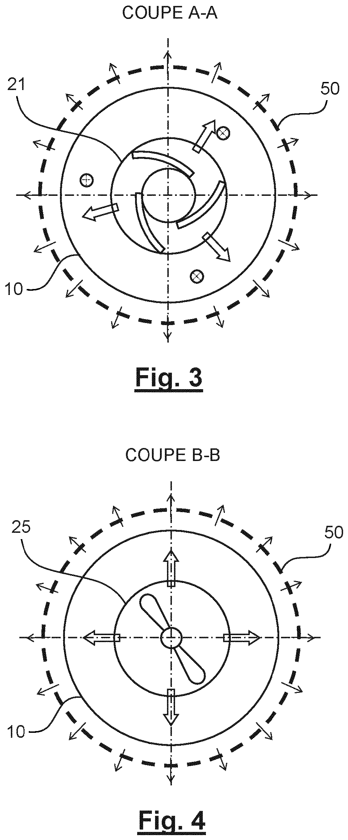

Les figures 3 et 4 sont respectivement des coupes selon des plans transversaux des balais aspirateurs des figures 1 et 2, et permettent de visualiser la disposition du filtre aval 50 autour du corps 10 de façon coaxiale.

Selon un aspect fondamental de l'invention, le filtre amont 40 et le filtre aval 50 sont coaxiaux et se recouvrent l'un l'autre avec les parois latérales du corps 10 situées entre les deux. Cette configuration permet d'avoir un balai aspirateur qui reste compact tout en ayant un deuxième filtre de surface filtrante importante, plus grande que la surface latérale du corps.

De plus, le filtre aval 50 selon l'invention peut être en différents matériaux filtrants et présenter des structures variées.

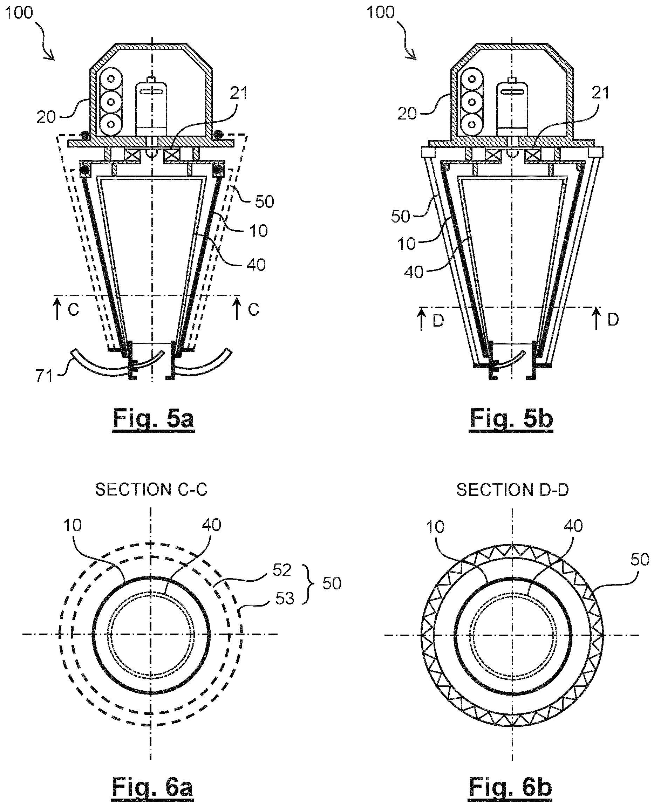

Les figures 5a et 6a illustrent un filtre aval 50 constitué de deux couches filtrantes 52 et 53 adjacentes pour plus d'efficacité. Le nombre de couches peut être augmenté selon le besoin. Le balai aspirateur 100 peut également être muni de déflecteurs 71 au niveau de l'entrée du corps 10 au-dessus de la tête d'aspiration pour dévier vers le haut l'eau qui ressort par le filtre aval 50.

Les figures 5b et 6b illustrent un filtre aval 50 sous forme de cartouche plissée.

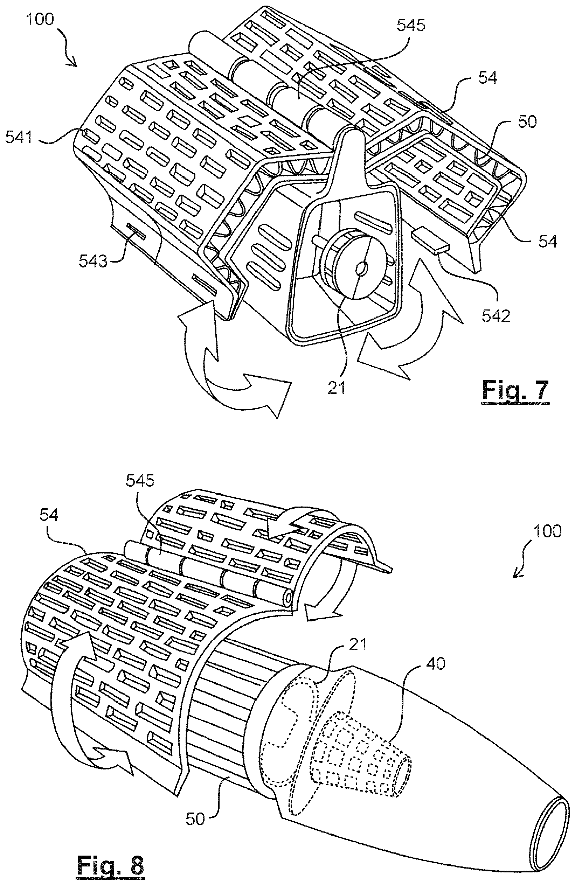

La figure 7 représente un autre mode de réalisation du balai aspirateur 100 dans lequel le filtre aval 50, ici en cartouche, est placée à l'intérieur d'une cassette de protection 54 à double parois, ladite cassette étant constituée de deux volets symétriques articulés sur le corps de l'aspirateur et se fermant par clipsage.

La cassette de protection 54 comporte sur chacune de ses parois, externe et interne, des fentes 541 réparties sur l'ensemble de sa surface pour permettre le passage de l'eau. Les volets de la cassette de protection 54 sont articulés sur le corps de l'aspirateur au moyen d'une liaison de type charnière 545.

La fermeture et l'ouverture de la cassette de protection 54 s'effectue au moyen d'ergots 542, placés sur l'extrémité libre d'un premier volet, et de logements 543, ménagés dans l'extrémité libre du deuxième volet, coopérant entre eux par clipsage par exemple.

Dans le mode de réalisation ci-dessus, le filtre aval 50 est également constitué de deux parties dont chacune est placée dans un volet de la cassette de protection 54.

La figure 8 représente un autre mode de réalisation du balai aspirateur 100 dans lequel le filtre aval 50, ici en cartouche, est d'un seul tenant, et la cassette de protection 54 est à simple paroi. De plus, dans ce mode de réalisation, la cassette de protection 54 est amovible, autrement dit la charnière 545 n'est pas solidaire du corps de l'aspirateur comme dans le cas de la figure 7.

Dans les deux modes de réalisation des figures 7 et 8, le filtre aval 50 est placé coaxialement au filtre amont 40 sans le recouvrir. De ce fait, les deux filtres, amont 40 et aval 50, sont en prolongement l'un de l'autre pour un encombrement encore plus réduit.

Selon l'invention, le filtre aval 50 peut envelopper totalement ou partiellement l'ensemble constitué du corps 10 de collecte de débris et du boitier fonctionnel 20. Par exemple, le filtre aval 50 peut être placé à l'intérieur de la cassette 54 et envelopper avec ladite cassette des parois du boitier fonctionnel 20 sur une circonférence inférieure à une circonférence dudit boitier et sur une longueur inférieure ou égale à une longueur dudit boitier.

La cassette de protection 54 peut comporter une paroi pleine, sans fentes, sur laquelle des moyens de préhension peuvent être fixés.

Un autre aspect de l'invention est le fait de pouvoir adjoindre à des balais aspirateurs existants, à condition qu'ils soient équipés d'un filtre amont placé à l'intérieur d'un corps de collecte de débris, un filtre aval selon les principes précités de sorte à obtenir deux filtres coaxiaux encadrant le corps de collecte de débris.

## Revendications

1. Balai aspirateur (100) pour le nettoyage de piscines comportant un corps principal (10, 20), des moyens de pompage (21, 22), une tête d'aspiration (30) et un filtre amont (40), placé à l'intérieur du corps principal et en amont des moyens de pompage, le balai aspirateur (100) comportant un filtre aval (50) placé à l'extérieur du corps principal et en aval des moyens de pompage, **caractérisé en ce que** le filtre aval (50) est placé de sorte à envelopper totalement ou partiellement ledit corps, et **en ce que** lesdits filtres sont coaxiaux.

2. Balai aspirateur selon la revendication 1, dans lequel le filtre amont (40) est traversé par l'eau de l'aspiration des moyens de pompage (21, 22), et le filtre aval (50) est traversé par l'eau du refoulement desdits moyens de pompage.

3. Balai aspirateur selon la revendication 1 ou la revendication 2, **caractérisé en ce que** le filtre aval (50) est fixé au corps principal (10, 20) de sorte à envelopper des parois latérales dudit corps sur toute leur circonférence et sur une longueur inférieure ou égale à une longueur dudit corps.

4. Balai aspirateur selon l'une quelconque des revendications précédentes, dans lequel le filtre aval (50) est fixé au corps principal (10, 20) par des moyens de fixation (51a, 51b) de sorte à enserrer ledit corps.

5. Balai aspirateur selon la revendication 4, dans lequel les moyens de fixation (51a, 51b) sont annulaires et permettent une fixation étanche.

6. Balai aspirateur selon l'une quelconque des revendications précédentes, dans lequel le filtre aval (50) est constitué d'un matériau poreux tel qu'un textile.

7. Balai aspirateur selon l'une quelconque des revendications précédentes, dans lequel le filtre aval (50) comprend au moins deux couches de matériau filtrant adjacentes.

8. Balai aspirateur selon l'une quelconque des revendications précédentes, dans lequel les moyens de pompage comprennent une turbine (21) entrainée par un moteur électrique (22).

9. Balai aspirateur selon l'une quelconque des revendications 1 à 7, dans lequel les moyens de pompage comprennent une hélice (25) entrainée par un moteur électrique.

10. Balai aspirateur selon l'une quelconque des revendications précédentes, comportant en outre une batterie (23) pour alimenter les moyens de pompage.

11. Balai aspirateur selon l'une quelconque des revendications précédentes à l'exclusion des revendications 4 et 5, dans lequel le filtre aval (50) est placé à l'intérieur d'une cassette de protection (54) solidaire au corps principal (10, 20) ou amovible, ladite cassette comportant deux volets articulés.

## Patentansprüche

1. Bürstsauger (100) zum Reinigen von Schwimmbecken mit einem Hauptkörper (10, 20), Pumpvorrichtungen (21, 22), einem Saugkopf (30) und einem vorgeschalteten Filter (40), der im Inneren des Hauptkörpers und den Pumpvorrichtungen vorgeschaltet angeordnet ist, wobei der Bürstsauger (100) einen nachgeschalteten Filter (50) aufweist, der außerhalb des Hauptkörpers und den Pumpvorrichtungen nachgeschaltet angeordnet ist, dadurch charakterisiert, dass der nachgeschaltete Filter (50) so angeordnet ist, dass er den Körper vollständig oder teilweise umhüllt, und dass die Filter koaxial sind.

2. Bürstsauger nach Anspruch 1, bei dem der vorgeschaltete Filter (40) vom Wasser des Ansaugens der Pumpvorrichtungen (21, 22) durchströmt wird und der nachgeschaltete Filter (50) vom Wasser des Austritts der Pumpvorrichtungen durchströmt wird.

3. Bürstsauger nach Anspruch 1 oder 2, dadurch charakterisiert, dass der nachgeschaltete Filter (50) am Hauptkörper (10, 20) befestigt ist, um die Seitenwände des Körpers über ihren gesamten Umfang zu umhüllen und über eine Länge, die kürzer oder gleich einer Länge des Körpers ist.

4. Bürstsauger nach einem der vorhergehenden Ansprüche, bei dem der nachgeschaltete Filter (50) am Hauptkörper (10, 20) durch Befestigungsmittel (51a, 51b) befestigt ist, um den Körper zu umschließen.

5. Bürstsauger nach Anspruch 4, bei dem die Befestigungsmittel (51a, 51b) ringförmig sind und eine dichte Befestigung ermöglichen.

6. Bürstsauger nach einem der vorhergehenden Ansprüche, bei dem der nachgeschaltete Filter (50) aus einem porösen Material wie etwa einer Textilie besteht.

7. Bürstsauger nach einem der vorhergehenden Ansprüche, wobei der nachgeschaltete Filter (50) mindestens zwei benachbarte Schichten von Filtermaterial umfasst.

8. Bürstsauger nach einem der vorhergehenden Ansprüche, bei dem die Pumpvorrichtungen eine von einem Elektromotor (22) angetriebene Turbine (21) umfassen.

9. Bürstsauger nach einem der Ansprüche 1 bis 7, bei dem die Pumpvorrichtungen einen von einem Elektromotor angetriebenen Propeller (25) umfassen.

10. Bürstsauger nach einem der vorhergehenden Ansprüche, der ferner eine Batterie (23) zum Antreiben der Pumpvorrichtungen aufweist.

11. Bürstsauger nach einem der vorhergehenden Ansprüche mit Ausnahme der Ansprüche 4 und 5, bei dem der nachgeschaltete Filter (50) innerhalb einer Schutzkassette (54) angeordnet ist, die fest mit dem Hauptkörper (10, 20) verbunden oder entfernbar ist, wobei die Kassette zwei schwenkbare Klappen aufweist.

## Claims

1. A broom vacuum cleaner (100) for cleaning swimming pools including a main body (10, 20), pumping means (21, 22), a suction head (30) and an upstream filter (40), placed inside the main body and upstream of the pumping means, the broom vacuum cleaner (100) including a downstream filter (50) placed outside the main body and downstream of the pumping means, **characterised in that** the downstream filter (50) is placed so as to completely or partially wrap said body, and **in that** said filters are coaxial.

2. The broom vacuum cleaner according to claim 1, wherein the upstream filter (40) is traversed by the water from the suction of the pumping means (21, 22), and the downstream filter (50) is traversed by the water from the discharge of said pumping means.

3. The broom vacuum cleaner according to claim 1 or claim 2, **characterised in that** the downstream filter (50) is fastened to the main body (10, 20) so as to wrap side walls of said body over their entire circumference and over a length less than or equal to a length of said body.

4. The broom vacuum cleaner according to any one of the preceding claims, wherein the downstream filter (50) is fastened to the main body (10, 20) by fastening means (51a, 51b) so as to enclose said body.

5. The broom vacuum cleaner according to claim 4, wherein the fastening means (51a, 51b) are annular and allow a sealed fastening.

6. The broom vacuum cleaner according to any one of the preceding claims, wherein the downstream filter (50) consists of a porous material such as a textile.

7. The broom vacuum cleaner according to any one of the preceding claims, wherein the downstream filter (50) comprises at least two adjacent layers of filtering material.

8. The broom vacuum cleaner according to any one of the preceding claims, wherein the pumping means comprise a turbine (21) driven by an electric motor (22).

9. The broom vacuum cleaner according to any one of claims 1 to 7, wherein the pumping means comprise a propeller (25) driven by an electric motor.

10. The broom vacuum cleaner according to any one of the preceding claims, further comprising a battery (23) for power supplying the pumping means.

11. The broom vacuum cleaner according to any one of the preceding claims, excluding claims 4 and 5, wherein the downstream filter (50) is placed inside a protective cassette (54) which is integral with the main body (10, 20) or removable, said cassette including two articulated flaps.
